# EUROPEAN PATENT SPECIFICATION

(11) **EP 3 242 362 B1**
(45) Date of publication and mention of the grant of the patent: **06.03.2019**
(21) Application number: 17167444.3
(22) Date of filing: 21.04.2017
(51) Int. Cl.: H02B 1/40

(54) **A KIT FOR REFURBISHING AND EXPANDING ELECTRICAL ENCLOSURES**
EIN KIT FÜR DIE SANIERUNG UND ERWEITERUNG VON ELEKTRISCHEN GEHÄUSEN
UN KIT POUR LE RECONDITIONNEMENT ET L'EXPANSION DES ENCEINTES ÉLECTRIQUES

(30) Priority: 03.05.2016 IT UA20163097
(43) Date of publication of application: 08.11.2017
(73) Proprietor: Schneider Electric Industries SAS, 92500 Rueil-Malmaison (FR)
(72) Inventor: DELLA CASA, Marco, I-24126 Bergamo (IT); GIPPONI, Andrea, I-24030 Paladina (Bergamo) (IT); PATIL, Dayanand Shankaragouda, 581118 Haveri District (IN); MARCHESI, Diego, I-24066 Pedrengo (Bergamo) (IT)
(74) Representative: De Ros, Alberto

(56) References cited:
- EP-A1- 1 724 888
- FR-A- 1 007 457
- FR-A1- 2 987 943

## Description

The present invention refers to the refurbishing, extension and servicing of electrical enclosures and concerns, in particular, a kit (or set of components) to refurbish and expand an existing electrical enclosure.

### Prior Art

In electricity distribution systems in buildings, electrical enclosures are usually installed which house one or more equipment shelf mounting rails, more commonly known as DIN rails or mounting rails for modular electrical devices (switches, circuit breaker modules, industrial control devices). Generally, the mounting rails are mounted on a support rack comprising a pair of vertical side bars, fixable to a vertical rear wall. The mounting rails are spaced parallel to one another in such a way as to be able to support various rows of modular electrical devices.

During the life of an electrical system, it is sometimes necessary to expand the electrical enclosure, for example, equipping it with additional modular electrical devices that require the addition of one or more mounting rails. At other times, for example, due to new needs, new regulations and requirements, the container itself must be replaced with a larger container. Currently, for expanding the electrical enclosure, the electrician must dismantle the existing enclosure and replace it with a larger one, entirely redoing the wiring operations of all the electrical devices installed in the old enclosure. An alternative is to add a new, smaller electrical enclosure next to, above or below the existing one. In the latter case, the final result is not optimal in terms of aesthetics and ergonomics. Document FR2987943 proposes the expansion of an existing electrical enclosure by adding an intermediary element.

### Summary of the Invention

It is the object of the invention to solve the aforementioned drawbacks, and in particular to undertake updating and expansion operations without disassembling from the existing rack the previously installed equipment, and without working on the previously installed wiring. The above and other objects and advantages, which will be better understood hereinafter, are achieved according to the invention, by a kit having the features defined in the appended claims.

In summary, the invention aims to provide a retrofit kit that comprises an additional DIN rail that may be easily added to the DIN rail and to the electrical devices already installed, to refurbish and expand an electrical enclosure. The additional DIN rail may be mounted above the existing upper DIN rail or below the lower DIN rail already installed. The kit also comprises a new casing and other accessories. Electrical devices already installed on the existing DIN rails are not disassembled, nor is work done on their wiring.

The result is a considerable savings in terms of time and cost, estimated at around 50%, with the further advantage of aesthetically refurbishing the electrical enclosure with a casing conforming to any new technical standards and the most current design. The kit allows the customer to update an old product by purchasing only the parts strictly necessary for the upgrade.

### Brief Description of the Drawings

The structural and functional features of some preferred but non-limiting embodiments of a kit according to the invention will now be described. Reference is made to the accompanying drawings, in which:
Figure 1 is a perspective view of part of a kit installed on the rack of an electrical enclosure that one wishes to expand;
Figure 2 is an exploded perspective view of an embodiment of a kit according to the invention;
Figure 3 is an enlarged perspective view similar to figure 2;
Figure 4 is a front view of part of the installed kit;

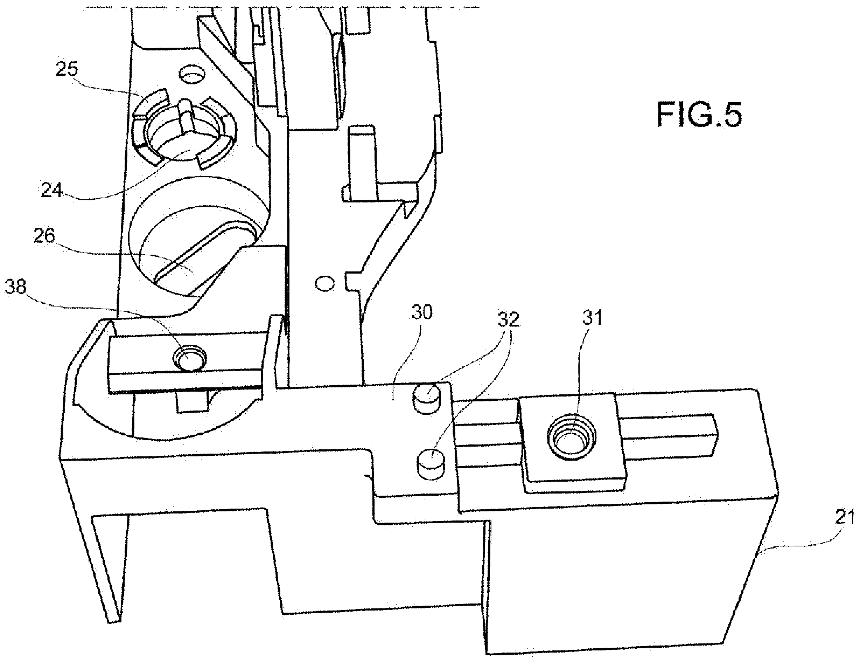

Figure 5 is a partial perspective view of a component of the kit;

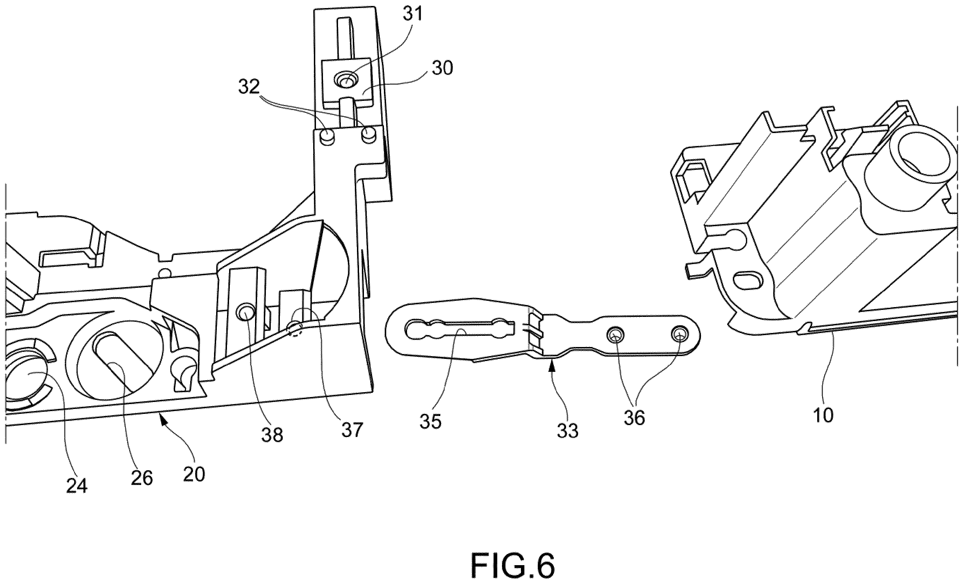

Figure 6 is a partial perspective view of some components of the kit in disassembled condition;
Figure 7 is a partial perspective view of the kit according to a possible connection configuration;
Figure 8 is a partial perspective view of the kit according to an alternative connection configuration to that of figure 7;

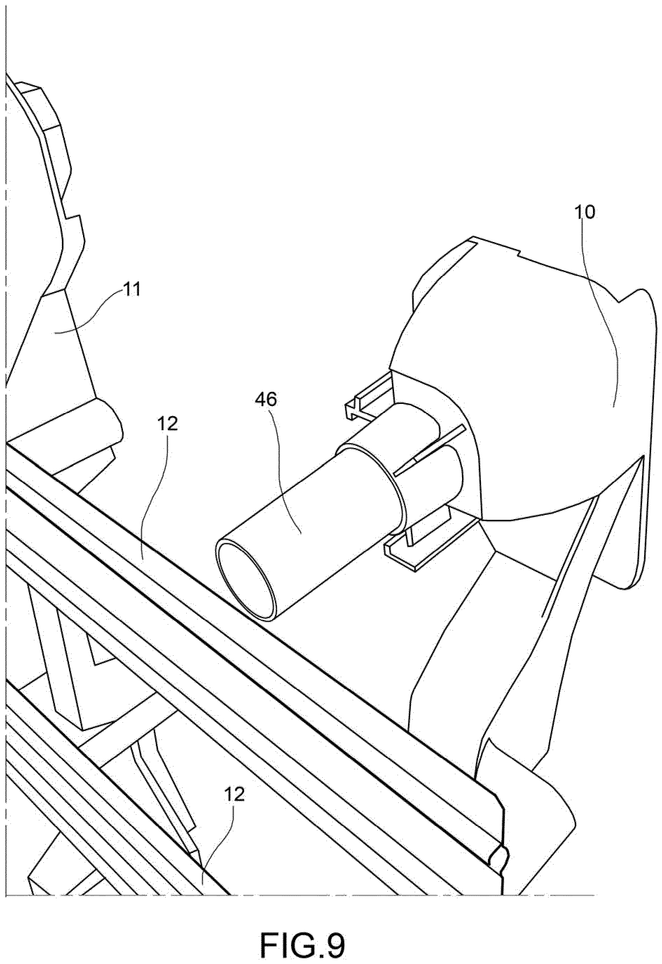

Figure 9 shows a component of the kit applied to a component of an existing electrical enclosure; and

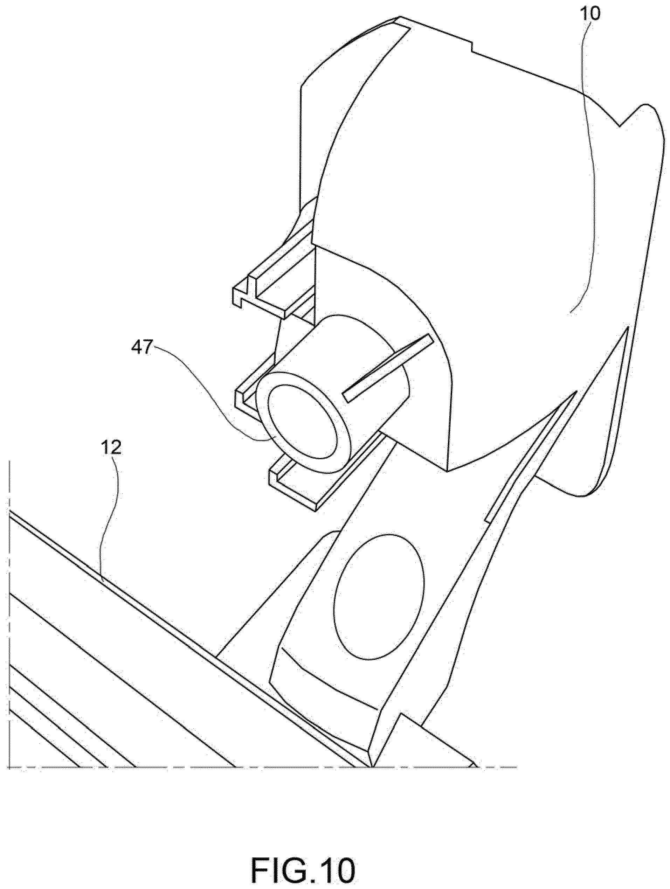

Figure 10 shows the component of the existing electrical enclosure of figure 9 devoid of the kit's component.

### Detailed Description

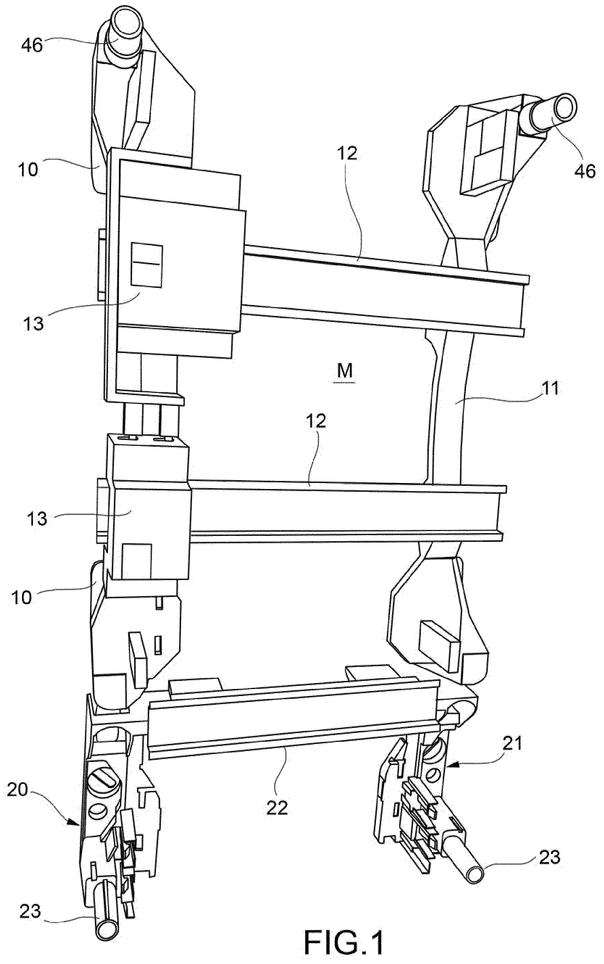

Referring initially to figure 1, a rack for supporting modular electrical devices comprises a pair of conventional left and right vertical side bars 10, 11, spaced horizontally one from another. The side bars 10, 11 are part of an existing electrical enclosure that one wishes to expand and refurbish. Depending on the type of rack, the side bars 10, 11 may be fixed directly to a vertical rear structure, such as a wall M. Alternatively, the side bars 10, 11 are fixable at an adjustable height along the respective right and left channels of a vertical conduit of plastic material, not shown.

As intended herein, terms such as "front" or "rear" are to be interpreted with reference to the installed condition of the electrical enclosure. Thus, "front" indicates a part turned toward a user who is standing in front of a wall to which the electrical enclosure is applied, while "rear" indicates a part turned toward the wall.

The two side bars 10, 11 support one or more horizontal mounting rails 12, known as DIN rails, mounted vertically equally spaced at a fixed center-to-center distance (for example, a DIN rail EN50022).

The mounting rails 12 are each intended to support a plurality of modular electrical devices 13, e.g. switches, circuit breaker modules, industrial control devices. The devices 13 are mounted (in known manner) side by side, horizontally aligned on the mounting rails 12.

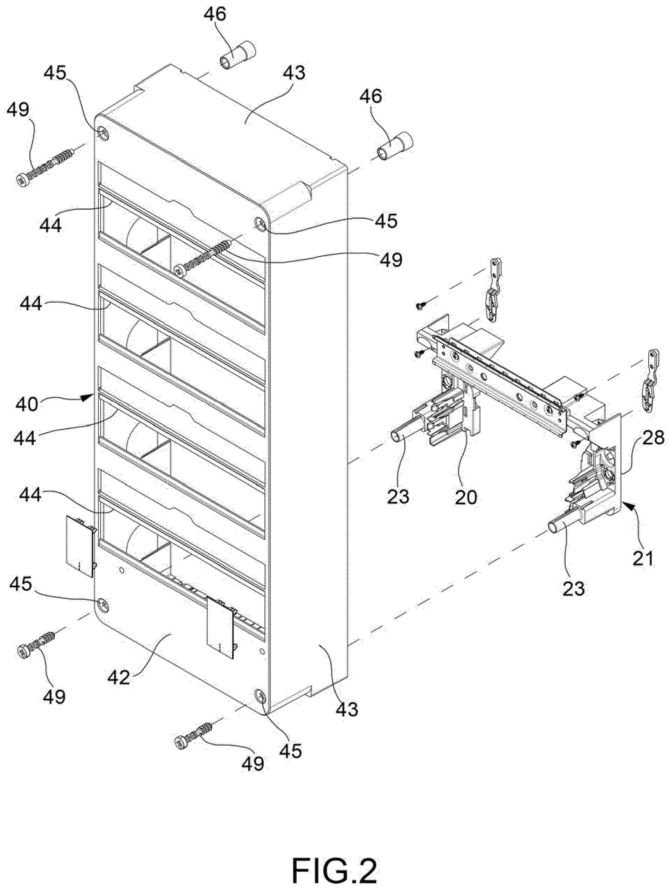

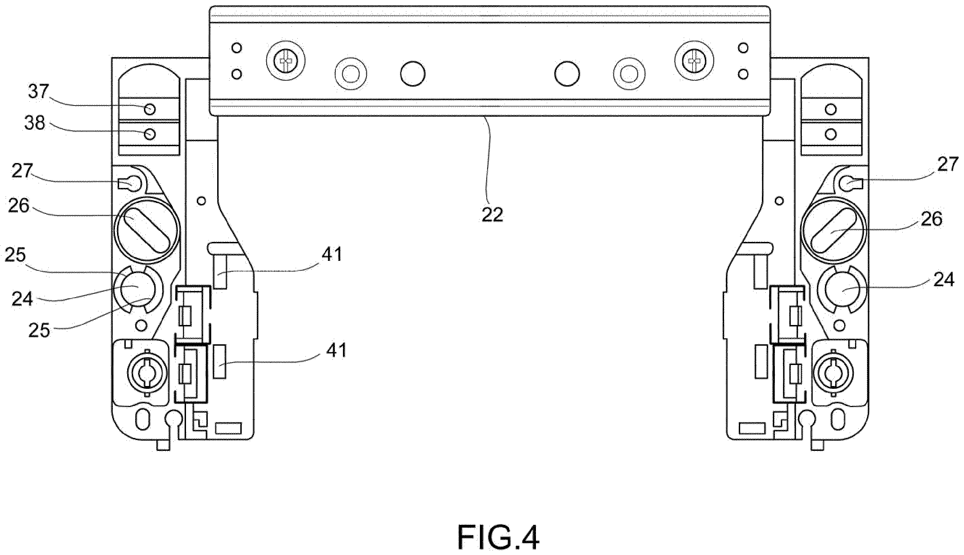

Referring also to figures 2-4, the kit of the present invention comprises at least one additional mounting rail (or DIN rail) 22 and a pair of additional support elements 20, 21, left and right, separated one from one another and each adapted to support one of the two opposite ends of the additional mounting rail 22. The additional mounting rail 22 is a mounting rail or DIN rail of a type known in the art and does not require being herein described in detail.

Each of the two support elements 20, 21 is fixable to the rear support structure (the wall M, in the illustrated example) in a substantially aligned vertical position above or below a respective side bar 10, 11.

The two support elements 20, 21 each have a plurality of means and seats for fixing them to the rear vertical support structure (such as a wall or conduit), to the additional mounting rail 22, to a closing front casing 40 on the electrical enclosure, and preferably also to other components and accessories, such as the existing side bars 10, 11 and other parts.

The specific shape of some construction details of the support elements 20, 21 shown in the drawings is to be considered generally known. Consequently, hereinafter in the present description only those elements of specific importance and interest for the purposes of the implementation of the present invention will be described in detail. As to the features of parts and elements not described in detail, reference may therefore be made to any rack of known design for supporting electrical enclosures and DIN rails.

The two additional left and right support elements 20, 21 have a symmetrical-type structure. The following description will therefore be made exclusively with reference to only one of the two supports, it being understood that the support not described must be considered identical, or substantially identical, to the one described.

Each support element 20, 21, made of plastic material (for example HIPS, PC, ABS), as a whole forms a tubular projection 23 which projects forwardly and horizontally. In the illustrated example, the tubular projection 23 extends from one end portion of the support element 20, 21, with the object of engaging a respective corner zone of the front casing 40. Each tubular projection 23 has at the front a threaded hole adapted to receive a screw for fixing it to the front casing 40.

The support elements each extend in the vertical direction, and each have one end (here defined as "external"), which presents the tubular projection 23, and an "internal" end that is directed toward a respective side bar 10 or 11, to which the support element 20 or 21 may be connected.

As means and seats for fastening to a rear support structure, the support elements 20, 21 may have a circular hole 24, in this example associated with one or more ramps 25 for a quarter-turn fastener (not shown) or another fastener element which allows the support element 20, 21 to be locked at adjustable heights along a rear conduit.

For fixing to a rear wall, an oblong through opening 26 may be provided. The oblong opening 26 may be obliquely inclined. A further asymmetrical through hole 27 may be provided for the connection, via a U-shaped coupling element (not shown) to an electrical enclosure mounted laterally beside the electrical enclosure in question.

The support elements 20, 21 have a rear surface 28, vertical in use, which may advantageously be planar for resting against a wall.

For fixing to a terminal block (not shown), the support elements 20, 21 may form horizontal protruding tabs 29 with end hooks.

To support the additional mounting rail 22, each support element 20, 21 has a flat support surface 30 (partially covered by the mounting rails 22 in figures 1-4), facing forward in use, against which a rear side of the additional mounting rail 22 may be placed. To fix the cross member 22, a screw hole may be provided.

To counteract the rotation of the mounting rail 22 in the vertical plane, two pivot pin formations 32 may protrude from the support surface 30 which should be inserted into two corresponding holes usually provided near the ends of the DIN rails, in a *per se* known manner.

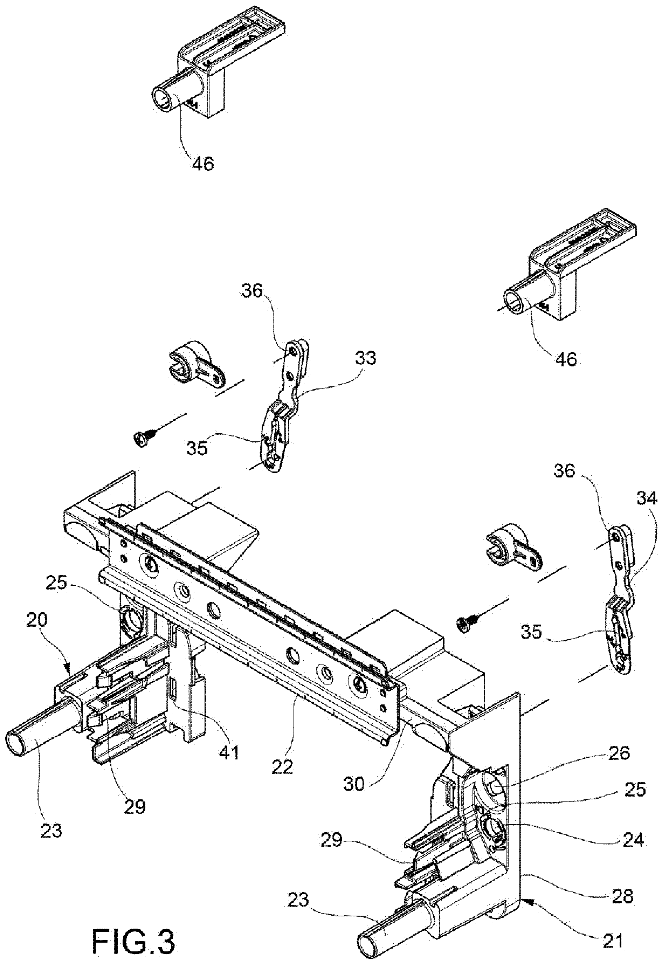

Each support element 20, 21 may be secured to a corresponding side bar 10, 11 already installed, via a respective connecting bracket 33, 34 (FIG. 3). The bracket 33, 34 has a first end that has a contoured opening 35 which allows the connection, e.g. by a screw, on the end of one of the side bars 10, 11, and a second end having at least one opening or hole 36 for connecting to the support element 20, 21 via another screw. Advantageously, at least one of the two openings at the two ends of the bracket, in this example, the opening 35, is elongated vertically (or longitudinally, along the main direction in which the bracket extends) in the condition of use, so as to conform to the distance between the side bar and the support element, as well as to different shapes of the side bar.

The connecting bracket 33, 34 may have a Z-shaped profile, with the two ends having the openings 35, 36 located at different levels to be able to be conform to side bars having different designs.

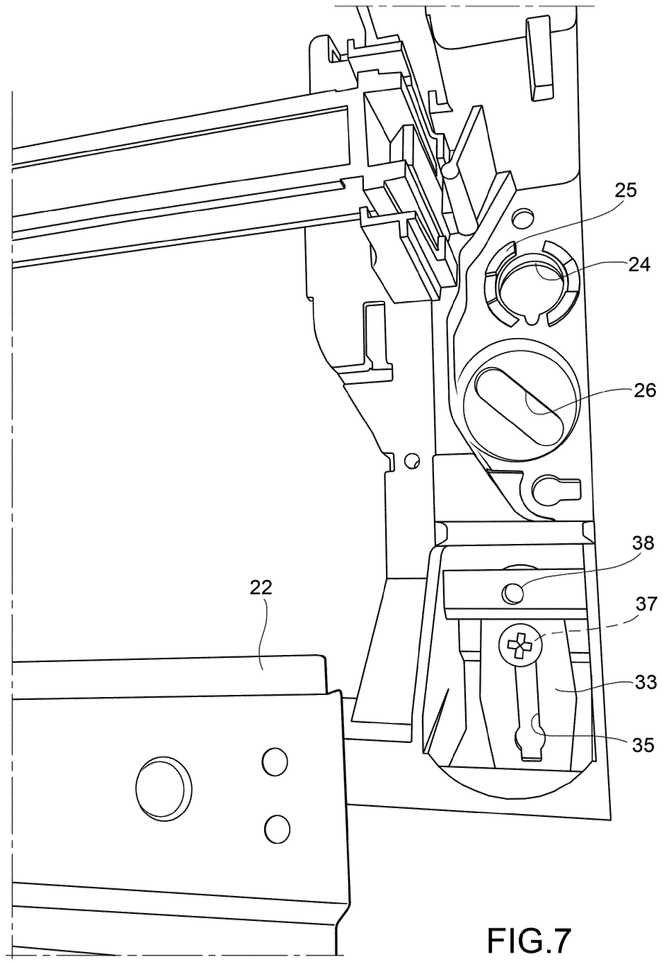

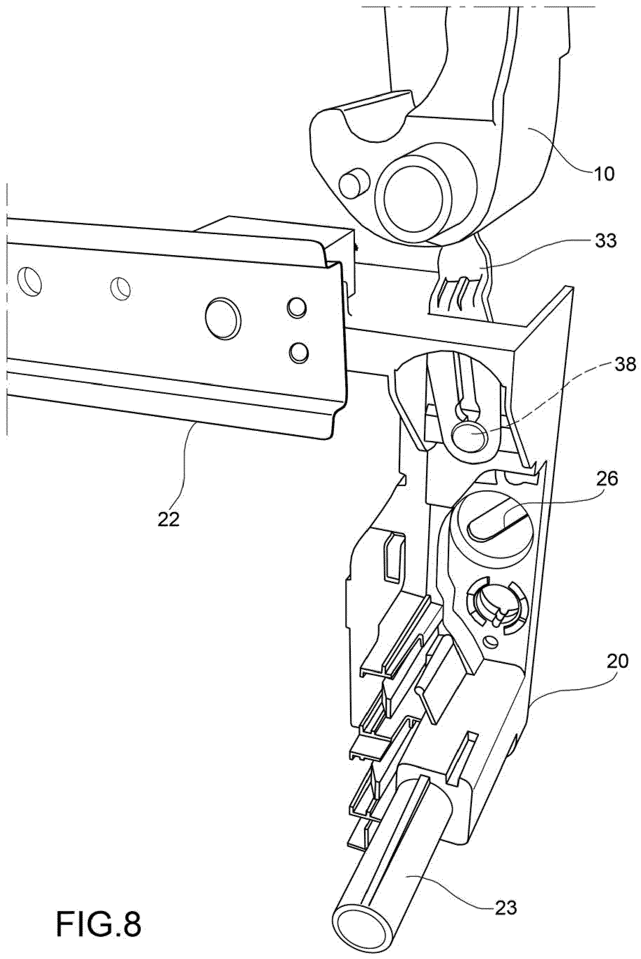

The support element 20, 21 may have two distinct holes 37, 38, located on two different levels, for coupling to the connecting bracket 33, 34 to be able to conform to different side bar designs. As illustrated in the example of figure 7, for connection to a given type of side bar, the bracket 33 may be connected to a hole 37 located in the most "rear" position. Alternatively, as illustrated in the example of figure 8, for connecting to a given type of side bar, the bracket 33 may be connected to the hole 38 located in the most "forward" position.

In addition, the support element may have one or more holes 41 for mounting a terminal block (not shown) on the vertical sides of the supports, in use facing a theoretical center vertical line of the electrical enclosure.

The front casing 40 has a rectangular front wall 42, vertical in condition of use, and a peripheral wall 43 which extends rearwardly.

In the front wall 42 are formed one or more windows 44 extending in the horizontal direction, vertically spaced with the same center-to-center spacing as the mounting rails. The windows 44 allow access to the electrical devices 13 mounted on the various mounting rails.

The support elements 20, 21 must be vertically spaced from the side bars 10, 11 in such a manner as to maintain a vertical distance between the additional mounting rail 22 and the mounting rail 12 closest to the same, corresponding to the center-to-center distance between the windows 44.

There are four holes 45 formed on the four corners of the front wall. Two of these holes (in the example of FIG. 2, the two lower holes 45) must be aligned with the tubular projections 23 formed by the support elements 20 and 21, while the two upper holes 45 must be aligned with a respective pair of sleeve adapters 46 which may be threaded onto respective protrusions 47 on conventional side bars already installed and equipped with a threaded hole. Screw fastener elements 49, inserted through the holes 45, secure the front casing 40 to the protrusions 47 of the side bars 10, 11 and the tubular projections 23 of the support elements 20, 21.

As may be appreciated, the present kit allows an existing electrical enclosure to be extended vertically (upward or downward, depending on the available space), expanding it and refurbishing its aesthetic appearance.

According to an alternative embodiment, not illustrated, the pair of additional support elements 20, 21, left and right, may be formed in a single piece with the additional mounting rail 22 on the opposite ends of the same.

Various aspects and embodiments of the kit and its components have been described. It is understood that each embodiment may be combined with any other embodiment. The invention, moreover, is not limited to the described embodiments, but may be varied within the scope defined by the appended claims. For example, the number of additional mounting rails, corresponding pairs of support elements for the additional mounting rails, and the number of windows provided in the outer casing may vary depending on the requirements. In the casing 40, a single window 44 may be provided to replace an old casing having a single row of electrical devices.

## Claims

1. A kit for refurbishing and expanding an electrical enclosure, the electrical enclosure comprising
a pair of left and right vertical side bars (10, 11), horizontally spaced from one another and fixed or fixable to a vertical rear structure (M); and
one or more horizontal mounting rails (12), mounted to the side bars (10, 11), for supporting a plurality of electrical devices (13); the kit comprising:
- a front casing (40) having
a rectangular front wall (42), vertical in use, with four corners,
a peripheral wall (43) extending rearwardly from the front wall (42), and
one or more windows (44) vertically spaced and formed in the front wall (42);
- at least one additional mounting rail (22);
- at least one pair of additional, left and right support elements (20, 21), each adapted to support one of the two opposite ends of the additional mounting rail (22), wherein each of the support elements provides
at least one seat (24, 26) for fastening the support element (20,21) to the rear support structure (M), **characterized in that** the support element (20,21) is configured to be fastened in a position substantially aligned vertically above or below a respective one of the side members (10, 11),
at least one tubular projection (23) which extends forward for engaging a corner area of the front casing (40) and receiving an element (49) for fastening the front casing to the additional support element (20, 21).

2. A kit according to claim 1, **characterized in that** the tubular projection (23) extends forwardly from an end portion of the support element (20, 21).

3. A kit according to claim 1 or 2, **characterized in that** the tubular projection (23) has a front threaded hole for receiving the fastening element (49) for securing the front casing (40) to the support element (20, 21).

4. A kit according to any one of the preceding claims, **characterized in that** the kit further comprises, for each support element (20, 21), a connecting bracket (33, 34) having two opposite ends with openings (35, 36) for connecting, respectively, to one of the support elements (20, 21) and to one of the side bars (10, 11).

5. A kit according to claim 4, **characterized in that** at least one of the two openings (35, 36) at the ends of the connecting bracket (33, 34) is elongated in a direction in which the connecting bracket extends.

6. A kit according to claim 5, **characterized in that** the connecting bracket (33, 34) has a shaped profile with two end portions providing the openings (35, 36) arranged at different levels.

7. A kit according to any one of claims 4 to 6, **characterized in that** each support element (20, 21) provides distinct coupling means or coupling seats (37, 38) on two different levels, for coupling to one of the connecting brackets (33, 34).

8. A kit according to any one of the preceding claims, **characterized by** further comprising at least one pair of sleeve adapters (46) applicable to the respective projections (47) of the side bars (10, 11) and adapted to remain interposed between a respective side bar (10, 11) and a corner portion of the front casing (40).

9. A kit according to any one of the preceding claims, **characterized in that** the additional support elements (20, 21) are two distinct elements, which are separate from one another and are each adapted to support a respective one of the two opposite ends of the additional mounting rail (22), and that each of the additional support elements (20, 21) has at least one means or seat (31, 32) for securing an end of the additional mounting rail (22).

10. A kit according to any one of claims 1 to 8, **characterized in that** the additional support elements (20, 21) and the additional mounting rail (22) are formed together in a single piece, with the additional support elements arranged at opposite ends of the additional mounting rail.

## Patentansprüche

1. Kit zur Sanierung und Erweiterung eines elektrischen Gehäuses, wobei das elektrische Gehäuse
ein Paar linker und rechter vertikaler Seitenstangen (10, 11), die horizontal voneinander beabstandet sind und an einer vertikalen hinteren Struktur (M) befestigt oder befestigbar sind; und
eine oder mehrere horizontale Montageschienen (12), die an den Seitenstangen (10, 11) montiert sind, um eine Vielzahl elektrischer Vorrichtungen (13) zu stützen, umfasst;
wobei das Kit umfasst:
- ein vorderes Gehäuse (40) mit
einer rechteckigen Vorderwand (42) mit vier Ecken, die im Gebrauch vertikal ist,
einer Umfangswand (43), die sich von der Vorderwand (42) nach hinten erstreckt,
und
einem oder mehreren Fenstern (44), die vertikal voneinander beabstandet sind und in der Vorderwand (42) gebildet sind;
- mindestens eine zusätzliche Montageschiene (22);
- mindestens ein Paar zusätzlicher linker und rechter Stützelemente (20, 21), die jeweils dazu eingerichtet sind, eines der beiden gegenüberliegenden Enden der zusätzlichen Montageschiene (22) zu stützen, wobei jedes Stützelement
mindestens einen Sitz (24, 26) zur Befestigung des Stützelements (20, 21) an der hinteren Stützstruktur (M), **dadurch gekennzeichnet, dass** das Stützelement (20, 21) zur Befestigung in einer Position ausgebildet ist, die im Wesentlichen vertikal über oder unter einem jeweiligen Seitenteil (10, 11) ausgerichtet ist,
mindestens einen rohrförmigen Vorsprung (23), der sich zum Eingriff mit einem Eckbereich des vorderen Gehäuses (40) und zur Aufnahme eines Elements (49) zum Befestigen des vorderen Gehäuses an dem zusätzlichen Stützelement (20, 21) nach vorne erstreckt, bereitstellt.

2. Kit nach Anspruch 1, **dadurch gekennzeichnet, dass** sich der rohrförmige Vorsprung (23) von einem Endabschnitt des Stützelements (20, 21) nach vorne erstreckt.

3. Kit nach Anspruch 1 oder 2, **dadurch gekennzeichnet, dass** der rohrförmige Vorsprung (23) ein vorderes Gewindeloch zur Aufnahme des Befestigungselements (49) zum Sichern des vorderen Gehäuses (40) an dem Stützelement (20, 21) aufweist.

4. Kit nach einem der vorhergehenden Ansprüche, **dadurch gekennzeichnet, dass** das Kit ferner für jedes Stützelement (20, 21) einen Verbindungsbügel (33, 34) mit zwei gegenüberliegenden Enden mit Öffnungen (35, 36) zum Verbinden mit jeweils einem der Stützelemente (20, 21) und mit einer der Seitenstangen (10, 11) umfasst.

5. Kit nach Anspruch 4, **dadurch gekennzeichnet, dass** mindestens eine der beiden Öffnungen (35, 36) an den Enden des Verbindungsbügels (33, 34) in einer Richtung, in die sich der Verbindungsbügel erstreckt, verlängert ist.

6. Kit nach Anspruch 5, **dadurch gekennzeichnet, dass** der Verbindungsbügel (33, 34) ein geformtes Profil mit zwei Endabschnitten aufweist, welche die auf verschiedenen Ebenen angeordneten Öffnungen (35, 36) bereitstellen.

7. Kit nach einem der Ansprüche 4 bis 6, **dadurch gekennzeichnet, dass** jedes Stützelement (20, 21) auf zwei verschiedenen Ebenen unterschiedliche Kupplungsmittel oder Kupplungssitze (37, 38) zum Koppeln an einen der Verbindungsbügel (33, 34) bereitstellt.

8. Kit nach einem der vorhergehenden Ansprüche, **dadurch gekennzeichnet, dass** es ferner mindestens ein Paar Hülsenadapter (46) umfasst, die an den jeweiligen Vorsprüngen (47) der Seitenstangen (10, 11) anbringbar sind und dazu eingerichtet sind, zwischen einer jeweiligen Seitenstange (10, 11) und einem Eckabschnitt des vorderen Gehäuses (40) eingeschoben zu bleiben.

9. Kit nach einem der vorhergehenden Ansprüche, **dadurch gekennzeichnet, dass** die zusätzlichen Stützelemente (20, 21) zwei unterschiedliche Elemente sind, die voneinander getrennt sind und jeweils dazu eingerichtet sind, jeweils eines der beiden gegenüberliegenden Enden der zusätzlichen Montageschiene (22) zu stützen, und dass jedes zusätzliche Stützelement (20, 21) mindestens ein Mittel oder einen Sitz (31, 32) zum Sichern eines Endes der zusätzlichen Montageschiene (22) aufweist.

10. Kit nach einem der Ansprüche 1 bis 8, **dadurch gekennzeichnet, dass** die zusätzlichen Stützelemente (20, 21) und die zusätzliche Montageschiene (22) einstückig zusammengebildet sind, wobei die zusätzlichen Stützelemente an gegenüberliegenden Enden der zusätzlichen Montageschiene angeordnet sind.

## Revendications

1. Un kit pour reconditionner et étendre un boîtier électrique, le boîtier électrique comprenant
une paire de barres latérales verticales gauche et droite (10, 11), espacées horizontalement l'une de l'autre et fixées ou pouvant être fixées sur une structure arrière verticale (M); et
un ou plusieurs rails de montage (12), montés sur les barres latérales (10, 11), pour soutenir plusieurs types de dispositifs électriques (13);
le kit comprenant:
- un boîtier avant (40) pourvu
d'une paroi avant rectangulaire (42), utilisée verticalement, avec quatre coins,
d'une paroi périphérique (43) s'étendant vers l'arrière à partir de la paroi avant (42),
et
d'une ou plusieurs fenêtres (44) espacées verticalement et positionnées sur la paroi avant (42);
- au moins un rail de montage supplémentaire (22);
- au moins une paire d'éléments de support gauche et droit supplémentaires (20, 21), chacun étant adapté pour soutenir l'une des deux extrémités opposées du rail de montage supplémentaire (22), où chacun des éléments de support est pourvu
d'au moins un logement (24, 26) pour attacher l'élément de support (20, 21) à la structure de support arrière (M), **caractérisé en ce que** l'élément de support (20, 21) est configuré pour être fixé dans une position substantiellement alignée verticalement au-dessus ou en dessous de l'un des membres latéraux respectifs (10, 11),
d'au moins une protubérance tubulaire (23) qui s'étend vers l'avant pour engager un coin du boîtier avant (40) et accueillir un élément (49) pour fixer le boîtier avant à l'élément de support supplémentaire (20, 21).

2. Un kit selon la revendication 1, **caractérisé en ce que** la protubérance tubulaire (23) s'étend vers l'avant à partir d'une partie d'extrémité de l'élément de support (20, 21).

3. Un kit selon la revendication 1 ou 2, **caractérisé en ce que** la protubérance tubulaire (23) est pourvue d'un trou fileté avant pour accueillir l'élément de fixation (49) pour sécuriser en placer le boîtier avant (40) à l'élément de support (20, 21).

4. Un kit selon l'une ou plusieurs des revendications précédentes, **caractérisé en ce qu'**il comprend également, pour chaque élément de support (20, 21), un support de raccordement (33, 34) pourvu de deux parties d'extrémités opposées avec des ouvertures (35, 36) pour le raccordement vers l'un des éléments de support (20, 21) et vers l'une des barres latérales (10, 11), respectivement.

5. Un kit selon la revendication 4, **caractérisé en ce qu'**au moins une des deux ouvertures (35, 36) aux extrémités du support de raccordement (33, 34) se prolonge dans la même direction que le support de raccordement.

6. Un kit selon la revendication 5, caractérisé en ce le support de raccordement (33, 34) a une forme de profil qui offre deux parties d'extrémités pourvues d'ouvertures (35, 36) disposées sur différents niveaux.

7. Un kit selon l'une ou plusieurs des revendications 4 à 6, **caractérisé en ce que** chaque élément de support (20, 21) est pourvu de moyens d'accouplement ou logements d'accouplements distincts (37, 38) sur deux niveaux différents, pour accouplement avec un des supports de raccordement (33, 34).

8. Un kit selon l'une ou plusieurs des revendications précédentes, **caractérisé en ce qu'**il comprend également au moins une paire d'adaptateurs à manchon (46) applicables aux protubérances (47) respectives des barres latérales (10, 11) et conçus pour rester interposés entre une barre latérale respective (10, 11) et une partie du coin du boîtier avant (40).

9. Un kit selon l'une ou plusieurs des revendications précédentes, **caractérisé en ce que** les éléments de support supplémentaires (20, 21) sont deux éléments distincts, qui sont séparés l'un de l'autre et conçus chacun pour soutenir respectivement une des deux extrémités opposées du rail de montage supplémentaire (22), et que chacun des éléments de support supplémentaires (20, 21) est pourvu d'au moins un moyen ou logement (31, 32) pour sécuriser en place une extrémité du rail de montage supplémentaire (22).

10. Un kit selon l'une ou plusieurs des revendications 1 à 8, **caractérisé en ce que** les éléments de support supplémentaires (20, 21) et le rail de montage supplémentaire (22) ne forment qu'une seule pièce une fois ensemble, les éléments de support supplémentaires étant disposés aux deux extrémités opposées du rail de montage supplémentaire.
